# EUROPÄISCHE PATENTSCHRIFT

(11) **EP 0 645 746 B1**
(45) Veröffentlichungstag und Bekanntmachung des Hinweises auf die Patenterteilung: **15.11.2000**
(21) Anmeldenummer: 94104148.5
(22) Anmeldetag: 17.03.1994
(51) Int. Cl.: G09F 3/00, G09F 3/08

(54) **Gurt**
Belt
Ceinture

(30) Priorität: 20.03.1993 DE 4309051
(43) Veröffentlichungstag der Anmeldung: 29.03.1995
(73) Patentinhaber: von Alvensleben, Maja, 20148 Hamburg (DE); Graf zu Stolberg-Stolberg, Christian, D-22609 Hamburg (DE)
(72) Erfinder: von Alvensleben, Maja, 20148 Hamburg (DE); Graf zu Stolberg-Stolberg, Christian, D-22609 Hamburg (DE)
(74) Vertreter: Heldt, Gert, Dr. Dipl.-Ing.

(56) Entgegenhaltungen:
- EP-A- 0 350 708
- EP-A- 0 408 909
- DE-U- 8 634 154
- DE-U- 8 911 358
- US-A- 4 969 663

## Beschreibung

Die Erfindung betrifft einen Haltegurt, wie er beispielsweise als Sicherheitsgurt in Kraftfahrzeugen und Flugzeugen, in Skiliften, bei Fallschirmen oder in Segelbooten bzw. als Traggurt bei Rucksäcken, Schulzranzen, Traggestellen und im Kinderwagen Verwendung findet, mit mindestens einem auf mindestens Teile seiner sichtbaren Oberfläche aufgeklebten Informationsträger, auf dem mindestens eine Information angeordnet ist.

Darüberhinaus betrifft die Erfindung ein Verfahren zur Herstellung eines Haltegurtes, der beispielsweise als Sicherheitsgurt in Kraftfahrzeugen und Flugzeugen oder in Skiliften, bei Fallschirmen oder in Segelbooten bzw. als Traggurt beispielsweise bei Rucksäcken, Schulranzen, Traggestellen und/oder in Kinderwagen Verwendung findet und auf mindestens einem Teil seiner sichtbaren Oberfläche mit mindestens einem eine Information enthaltenden Informationsträger verklebt wird.

Aus der DE-U 8911358 ist ein Haltegurt bekannt geworden, der aus besonders geführten Webfäden bestehende Formausbildungen besitzt. Diese stehen erhaben über die Oberfläche des Gurtes vor. Aus dieser Druckschrift sind darüberhinaus auch Materialstreifen bekannt, die auf eine Oberfläche eines Sicherheitsgurtes aufgeklebt werden können.

Durch die Webfäden, die in das Material des Sicherheitsgurtes integriert sind, wird die Homogenität dieses Materials beeinträchtigt, so daß im Bereich der Webfäden mit dem Auftreten von Spitzenspannungen gerechnet werden muß, wenn der Sicherheitsgurt belastet wird. Dadurch wird die Haltbarkeit des Sicherheitsgurtes beeinträchtigt. Angesichts derzeitiger Prüfungsrichtlinien ist die mindest erforderliche Festigkeit des mit den Webfäden versehenen Sicherheitsgurtes nicht mehr gewährleistet.

Die aus derselben Druckschrift bekannt gewordene Verklebung des Sicherheitsgurtes mit einer Kunststofffolie führt nicht mit der notwendigen Sicherheit zu einer Verbindung zwischen der Kunststofffolie einerseits und dem Material des Sicherheitsgurtes andererseits. Dabei muß damit gerechnet werden, daß das Material des Sicherheitsgurtes ein vom Material der aufgeklebten Kunststofffolie verschiedenes Elastizitätsverhalten aufweist. Beim Aufrollen bzw. Entrollen des Sicherheitsgurtes treten daher regelmäßig Spannungen in der Klebeschicht auf, die dazu führen, daß sich diese löst, so daß sich die Kunststofffolie von der Oberfläche des Sicherheitsgurtes ablöst. Die Gefahr besteht, daß sich die abgelöste Kunststofffolie im Mechanismus der Auf- bzw. Abwickelrolle verfängt und damit die Sicherheit der den Sicherheitsgurt benutzenden Personen beeinträchtigt.

Darüberhinaus ist aus US-A-4 969 663 ein Bezug für einen Haltegurt bekannt, der gleitend mit dem Haltegurt verbunden wird. Eine dauerhafte Verbindung zwischen einem Informationsträger und dem Haltegurt ist aus dieser Druckschrift nicht bekannt. Der Haltegurt gleitet bezüglich des Bezuges. Zugspannungen zwischen dem Bezug und dem Haltegurt können nicht auftreten. Aus diesem Grunde bleibt offen, welches Material zur festen Verbindung mit dem Haltegurt geeignet ist.

Aus EP-A-0 350 708 ist bekannt, ein Gewebe mit einer besonderen Tinte zu bedrucken und anschließend mit dem Haltegurt zu verbinden. Dabei wird jedoch offengelassen, wie das aus synthetischen Fasern hergestellte Material beschaffen sein muß, damit es auf Dauer mit der Oberfläche eines Haltegurtes verbunden werden kann. Zwar wird beispielsweise in diesem Zusammenhang darauf verwiesen, daß das Gewebe aus synthetischen Fasern hergestellt werden kann, beispielsweise aus Nylon und/oder Polyester. In welchem Verhältnis die Eigenschaften dieses Gewebes zu dem Material des Haltegurtes stehen müssen, damit eine haltbare Verbindung im Rahmen des Haltegurtes zustandekommt, ist aus dieser Druckschrift nicht bekannt.

Aufgabe der vorliegenden Erfindung ist es daher, einen Gurt zu schaffen, der geeignet ist, mit Informationen oder Werbung versehen zu werden, und dabei nicht in seiner Funktion beeinträchtigt wird.

Diese Aufgabe wird erfindungsgemäß hinsichtlich der Vorrichtung dadurch gelöst, daß der Informationsträger aus einem elastisch dehnbaren textilen Material ausgebildet ist, dessen Materialeigenschaft auf das Gurtmaterial hinsichtlich dessen Dehnungsverhalten abgestimmt sind.

Hinsichtlich des Verfahrens wird diese Aufgabe dadurch gelöst, daß für den Informationsträger ein textiles elastisch dehnbares Material ausgewählt wird, das hinsichtlich seines Dehnverhaltens auf ein den Haltegurt ausbildendes Gurtmaterial abgestimmt ist.

Das für die Ausbildung des Informationsträgers benutzte Textilmaterial begünstigt eine dauerhafte Verklebung mit dem Material des Haltegurtes. In die Homogenität des Materials, aus dem der Haltegurt besteht, wird nicht eingegriffen. Der Informationsträger besitzt ein elastisches Dehnverhalten, das auf dasjenige des Gurtmaterials abgestimmt ist, so daß bei dem zu erwartenden häufigen Dehnen des Gurtmaterials eine Ablösung des aufgeklebten Informationsträgers nicht eintritt.

Auf diese Weise kann eine bisher ungenutzte Fläche an gut sichtbarer Stelle mit wichtigen Informationen oder Werbung versehen werden. Dabei ist nicht nur an wichtige persönliche Informationen zu denken, z. B. Angaben über Wohnort, Telefonnummer und Blutgruppe, sondern auch an Erinnerungsträger, die einen Hinweis auf wichtige Termine enthalten. Außerdem kann die Fläche des Informationsträgers auch zur Anbringung von Werbeaussagen genutzt werden.

Gemäß einer bevorzugten Ausführungsform der Erfindung ist der Informationsträger lösbar mit der Oberfläche des Haltegurtes verbunden. Diese lösbare Verbindung hat den Vorteil, daß der mit Werbung versehene Informationsträger von Zeit zu Zeit gegen einen neuen Informationsträger ausgetauscht werden kann.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

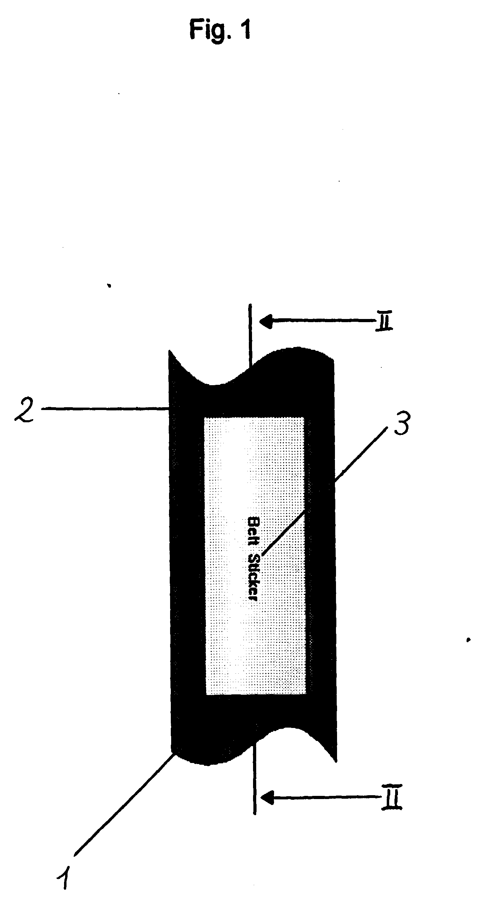

- Fig. 1:: eine Vorderansicht eines Gurtes im Ausschnitt,

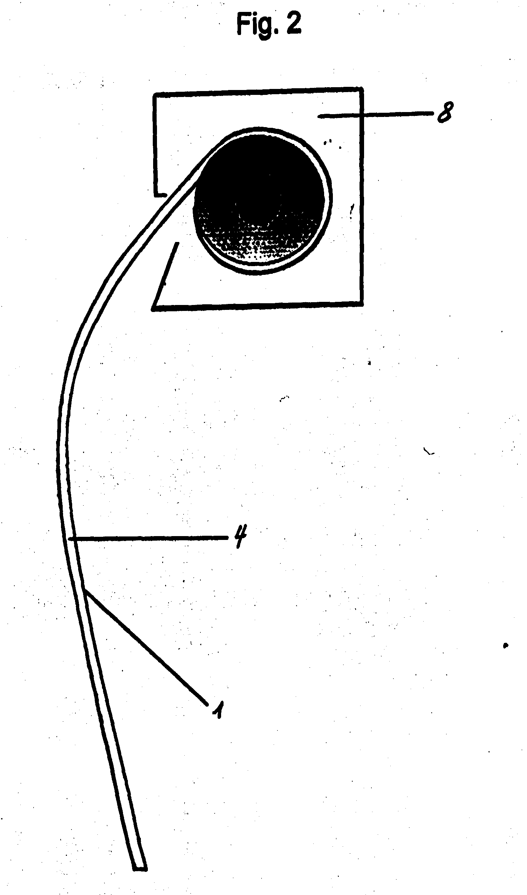

- Fig. 2:: eine Seitenansicht eines Gurtes von Figur 1 entlang der Linie II-II geschnitten mit zusätzlich dargestelltem Gurtgehäuse und

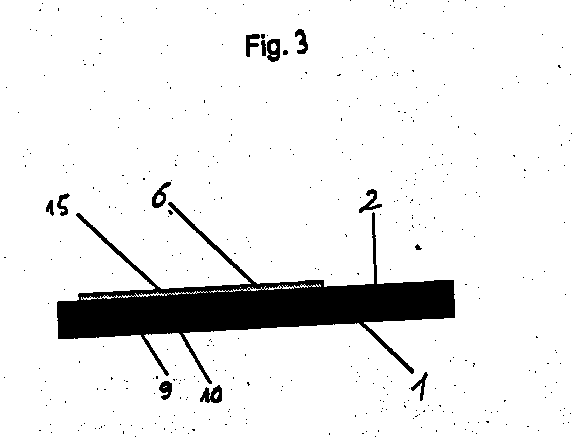

- Fig. 3:: eine Seitenansicht eines Gurtes mit Informationsträger.

Ein Gurt (1) weist eine im angelegten Zustand sichtbare Gurtoberfläche (2) auf, auf der die zu vermittelnde Information (3) angeordnet ist.

Die Information (3) ist auf einem Informationsträger (6) angeordnet. Ist der Informationsträger (6) austauschbar mit dem Gurt (1) verbunden, hat dies den Vorteil, daß neue, andere Informationen (3) auf die sichtbare Gurtoberfläche (2) aufgebracht werden können. Der Informationsträger (6) ist auf seiner der Gurtoberfläche (2) zugewandten Innenfläche (9) mit Klebstoff (10) versehen, so daß er leicht auf dem Gurt (1) bzw. dessen sichtbarer Oberfläche (2) befestigt werden kann.

Zum Anbringen eines Informationsträgers (6) wird beispielsweise an dessen Unterseite eine Schutzfolie entfernt und an vorgesehener Stelle auf die sichtbare Oberfläche (2) des Gurtes (1) aufgelegt und angedrückt. Zweckmäßigerweise sind die Informationsträger (6) als nicht zu lange Streifen ausgebildet, da es einfacher ist, mehrere kurze Informationsträger als einen langen Informationsträger auf einem Gurt (1) sauber und lagerichtig zu plazieren. Es ist aber auch jede andere Kontur des Informationsträgers (6) möglich.

## Patentansprüche

1. Haltegurt, wie er beispielsweise als Sicherheitsgurt in Kraftfahrzeugen und Flugzeugen, in Skiliften, bei Fallschirmen oder in Segelbooten bzw. als Traggurt bei Rucksäcken, Schulranzen, Traggestellen und im Kinderwagen Verwendung findet, mit mindestens einem auf mindestens Teile seiner sichtbaren Oberfläche (2) aufgeklebten Informationenträger (6), auf dem mindestens eine Information (3) angeordnet ist, dadurch gekennzeichnet, daß der Informationsträger (6) aus einem elastisch dehnbaren textilen Material ausgebildet ist, dessen Materialeigenschaften auf das Gurtmaterial hinsichtlich dessen Dehnungsverhalten abgestimmt sind.

2. Gurt nach Anspruch 1, dadurch gekennzeichnet, daß der Informationsträger (6) mit der Oberfläche (2) des Gurtes (1) lösbar verbunden ist.

3. Gurt nach Anspruch 1 oder 2, dadurch gekennzeichnet, daß der Informationsträger (6) aus einem flexiblen Material ausgebildet ist.

4. Gurt nach einem der Ansprüche 1 bis 3, dadurch gekennzeichnet, daß das Material des Informationsträgers (6) mindestens in einem Temperaturbereich von minus 10° C bis 40° C auf das Gurtmaterial abgestimmt ist.

5. Gurt nach einem der Ansprüche 1 bis 4, dadurch gekennzeichnet, daß das Material des Informationsträgers (6) schwer entflammbar ist.

6. Gurt nach einem der Ansprüche 1 bis 5, dadurch gekennzeichnet, daß das Material des Informationsträgers (6) leicht schneidbar ist.

7. Gurt nach einem der Ansprüche 1 bis 6, dadurch gekennzeichnet, daß der Informationsträger (6) beschreibbar ist.

8. Gurt nach einem der Ansprüche 1 bis 7, dadurch gekennzeichnet, daß der Informationsträger (6) auf seiner der sichtbaren Oberfläche (2) des Gurtes (1) abgewandten Außenseite (15) bedruckt ist.

9. Gurt nach einem der Ansprüche 1 bis 7, dadurch gekennzeichnet, daß der Informationsträger (6) durchsichtig ist und auf seiner der sichtbaren Oberfläche (2) zugewandten Innenfläche (9) bedruckt ist.

10. Gurt nach einem der Ansprüche 1 bis 9, dadurch gekennzeichnet, daß mindestens Teile des Informationsträgers (6) mit einer metallisierten Metallschicht versehen sind.

11. Gurt nach einem der Ansprüche 1 bis 10, dadurch gekennzeichnet, daß der Informationsträger (6) streifenförmig ausgebildet ist.

12. Gurt nach einem der Ansprüche 1 bis 11, dadurch gekennzeichnet, daß der Gurt (1) zusammen mit der auf ihm angeordneten Information (3) in ein Gurtgehäuse (8) einrollbar ist.

13. Gurt nach einem der Ansprüche 1 bis 12, dadurch gekennzeichnet, daß die sichtbaren Oberfläche (2) des Gurtes (1) teilweise mit einer reflektierende Schicht versehen ist.

14. Verfahren zu Herstellung eines Haltegurtes, der beispielsweise als Sicherheitsgurt in Kraftfahrzeugen und Flugzeugen oder in Skiliften, bei Fallschirmen oder in Segelbooten bzw. als Traggurt z. B. bei Rucksäcken, Schulranzen, Traggestellen und/oder in Kinderwagen Verwendung findet und auf mindestens einem Teil seiner sichtbaren Oberfläche mit mindestens einem eine Information enthaltenden Informationsträger (6) verklebt wird, dadurch gekennzeichnet, daß für den Informationsträger (6) ein textiles elastisch dehnbares Material ausgewählt wird, das hinsichtlich seines Dehnungsverhaltens auf ein den Haltegurt ausbildendes Material abgestimmt wird.

15. Verfahren nach Anspruch 14, dadurch gekennzeichnet, daß der Klebstoff (10) des Informationsträgers (6) zur Zwischenlagerung mit einer abziehbaren Schutzfolie versehen wird.

## Claims

1. A holding belt as is used for example as a safety belt in motor vehicles and aircraft, in ski lifts, in relation to parachutes or in sailing boats or as a carrier belt in relation to rucksacks, school satchels, support structures and in prams, having at least one information carrier (6) which is glued on to at least parts of its visible surface (2) and on which is arranged at least one item of information (3), characterised in that the information carrier (6) is formed from an elastically stretchable textile material whose material properties are matched to the belt material in terms of the stretch characteristics thereof.

2. A belt according to claim 1 characterised in that the information carrier (6) is releasably joined to the surface (2) of the belt (1).

3. A belt according to claim 1 or claim 2 characterised in that the information carrier (6) is formed from a flexible material.

4. A belt according to one of claims 1 to 3 characterised in that the material of the information carrier (6) is matched to the belt material at least in a temperature range of from minus 10°C to 40°C.

5. A belt according to one of claims 1 to 4 characterised in that the material of the information carrier (6) is fire-resistant.

6. A belt according to one of claims 1 to 5 characterised in that the material of the information carrier (6) is easily cuttable.

7. A belt according to one of claims 1 to 6 characterised in that the information carrier (6) is writable.

8. A belt according to one of claims 1 to 7 characterised in that the information carrier (6) is printed upon on its outside (15) which is remote from the visible surface (2) of the belt (1).

9. A belt according to one of claims 1 to 7 characterised in that the information carrier (6) is transparent and is printed upon on its inside surface (9) which is towards the visible surface (2).

10. A belt according to one of claims 1 to 9 characterised in that at least parts of the information carrier (6) are provided with a metallised metal layer.

11. A belt according to one of claims 1 to 10 characterised in that the information carrier (6) is of a strip-shaped configuration.

12. A belt according to one of claims 1 to 11 characterised in that the belt (1) together with the information (3) arranged thereon can be rolled into a belt housing (8).

13. A belt according to one of claims 1 to 12 characterised in that the visible surface (2) of the belt (1) is partially provided with a reflecting layer.

14. A process for the production of a holding belt which is used for example as a safety belt in motor vehicles and aircraft or in ski lifts, in relation to parachutes or in sailing boats or as a carrier belt for example in relation to rucksacks, school satchels, support structures and/or in prams, and which is provided by adhesive means on at least a part of its visible surface with at least one information carrier (6) containing an item of information, characterised in that a textile elastically stretchable material is selected for the information carrier (6), said material being matched in respect of its stretch characteristics to a material forming the holding belt.

15. A process according to claim 14 characterised in that the adhesive (10) of the information carrier (6) is provided for the purposes of intermediate storage with a protective foil which can be pulled off.

## Revendications

1. Sangle de retenue, du type utilisé par exemple comme ceinture de sécurité dans des véhicules automobiles et dans des avions, dans des téléskis, dans des parachutes ou sur des voiliers ou comme bretelle de transport dans des sacs à dos, dans des cartables d'école, dans des porte-bébés et dans des voitures d'enfants, comprenant au moins un support d'informations (6) qui est collé sur des parties au moins de la surface (2) visible de la sangle et sur lequel au moins une information (3) est appliquée, caractérisée par le fait que le support d'informations (6) est formé d'un matériau textile extensible élastiquement dont les caractéristiques sont adaptées au matériau de la sangle, sur le plan du comportement à l'allongement.

2. Sangle selon la revendication 1, caractérisée par le fait que le support d'informations (6) est lié de manière séparable à la surface (2) de la sangle (1).

3. Sangle selon la revendication 1 ou 2, caractérisée par le fait que le support d'informations (6) est formé d'un matériau souple.

4. Sangle selon une des revendications 1 à 3, caractérisée par le fait que le matériau du support d'informations (6) est adapté au matériau de la sangle, au moins dans une plage de température allant de moins 10°C à 40°C.

5. Sangle selon une des revendications 1 à 4, caractérisée par le fait que le matériau du support d'informations (6) est difficilement inflammable.

6. Sangle selon une des revendications 1 à 5, caractérisée par le fait que le matériau du support d'informations (6) peut être coupé facilement.

7. Sangle selon une des revendications 1 à 6, caractérisée par le fait que l'on peut écrire sur le support d'informations (6).

8. Sangle selon une des revendications 1 à 7, caractérisée par le fait que le support d'informations (6) comporte des éléments imprimés sur sa face extérieure (15), éloignée de la surface (2) visible de la sangle (1).

9. Sangle selon une des revendications 1 à 7, caractérisée par le fait que le support d'informations (6) est transparent et porte des éléments imprimés sur sa face intérieure (9), tournée vers la surface (2) visible.

10. Sangle selon une des revendications 1 à 9, caractérisée par le fait qu'au moins des parties du support d'informations (6) sont pourvues d'une couche de métal obtenue par métallisation.

11. Sangle selon une des revendications 1 à 10, caractérisée par le fait que le support d'informations (6) se présente sous la forme d'une bande.

12. Sangle selon une des revendications 1 à 11, caractérisée par le fait que la sangle (1) avec les informations (3) appliquées sur celle-ci peut être enroulée dans un boîtier (8).

13. Sangle selon une des revendications 1 à 12, caractérisée par le fait que la surface visible (2) de la sangle (1) est partiellement pourvue d'un revêtement réfléchissant.

14. Procédé de fabrication d'une sangle de retenue, du type utilisé par exemple comme ceinture de sécurité dans des véhicules automobiles et dans des avions, dans des téléskis, dans des parachutes ou sur des voiliers ou comme sangle de transport dans des sacs à dos, dans des cartables d'école, dans des porte-bébés et dans des voitures d'enfants, sur une partie au moins de la surface visible de laquelle est collé un support d'informations (6) portant au moins une information, caractérisé par le fait que l'on utilise pour le support d'informations (6) un matériau textile extensible élastiquement, dont les caractéristiques sont adaptées au matériau de la sangle, sur le plan du comportement à l'allongement.

15. Procédé selon la revendication 14, caractérisé par le fait que l'adhésif (10) du support d'informations (6) est muni d'une pellicule de protection pelable pour le stockage temporaire du support d'informations (6).
